# EUROPEAN PATENT SPECIFICATION

(11) **EP 1 558 850 B1**
(45) Date of publication and mention of the grant of the patent: **30.01.2008**
(21) Application number: 03810721.5
(22) Date of filing: 05.11.2003
(51) Int. Cl.: F16B 13/02, F16B 13/04

(54) **FRICTION PLUG**
REIBDÜBEL
CHEVILLE DE FROTTEMENT

(30) Priority: 05.11.2002 NO 20025310
(43) Date of publication of application: 03.08.2005
(73) Proprietor: Grepi Plast AS, 3739 Skien (NO)
(72) Inventor: HUSTVEIT, Toralf, N-3960 Stathelle (NO)
(74) Representative: Stein, Jan Anders Lennart
(86) International application number: PCT/NO2003/000373
(87) International publication number: WO 2004/042238

(56) References cited:
- CH-A- 445 800
- US-A- 4 770 585
- US-A- 5 232 302
- US-A1- 2001 013 210

## Description

The present invention relates to a plug for fastening into a hole in a hard material, e.g. concrete, gas concrete or lightweight concrete such as Leca.

The existing fastening plugs usually used by the building and construction industry, of workers as well as private persons, are mainly constructed according to one main principle. This relates to plastic plugs in which some form of barbs is provided, so as to hinder withdrawal of the plug from wall, concrete, Leca etc. In some cases the plug is expandable when a screw or spike being pushed into the plug, presses the plug out against the walls in the hole. This, however, often does not work, especially in Leca and materials of the lightweight concrete type.

Examples showing these solutions are described in the patent publications GB 1.184.469, showing a solution based on the screwing of a screw into the plug and thus pressing it into the surrounding material for fastening the plug, and NO 111.872, describing a plastic plug comprising tongues acting as barbs is the plug is pulled out.

The solution in i GB 1.184.469 is not suitable in situations with softer materials such as lightweight concrete or gas concrete, which is crushed when the screw presses the plug outward, and thus destroys the hold in the material. A similar problem is related to the solutions described in US 5.161.296 and EP 713.013.

The plug in NO 111.872 will to some degree provide a grip toward the hole as long as there are some roughness in which the tongues may get a hold. It will, however, not obtain a grip against hard materials. If a screw is used to expand the plug it will have the same disadvantages as the solutions discussed above.

US 5,232,302 discloses a plug according to the preamble of claim 1.

EP 763.665 describes another solution in which a metal bolt is glued or cemented into the hole. Without the adhesive the bolt will not obtain any grip in the hole, and once cemented in place it will be impossible to remove. This thus represents a less convenient solution than the present invention.

It is thus an object for the present invention to provide a plug solving the problems related to the known art, and which thereby provides a solution which may be used in relation to a number of different materials. In addition it is an object to provide a versatile plug having low production costs and being easy to use.

The objects mentioned above are obtained with a plug as described above and being characterized as stated in the accompanying claim 1.

This new design is thus based on friction against the walls in the hole. This is obtained in that the outer side of the plug, the part being in contact with the walls in the hole, are molded in a soft, rubber-like material (thermoplastic rubber), while the core of the plug is molded in a hard plastic material. The soft material is partially deformed when the plug is inserted into the hole. When trying to remove the plug, the high friction together with the need for a reversed deformation will result in great resistance against the movement. The hard core material is necessary to make it possible to insert the plug with a hammer etc.

The invention will be described below with reference to the accompanying drawings, illustrating the invention by way of an example.
- Figure 1a, 1b: show the core of an embodiment of the plug according to the invention, as well as a section of the same.
- Figure 2a, 2b: show a plug according to the invention, as well as a section of the same.
- Figure 3: is a perspective view of the plug illustrated in figure 2a.

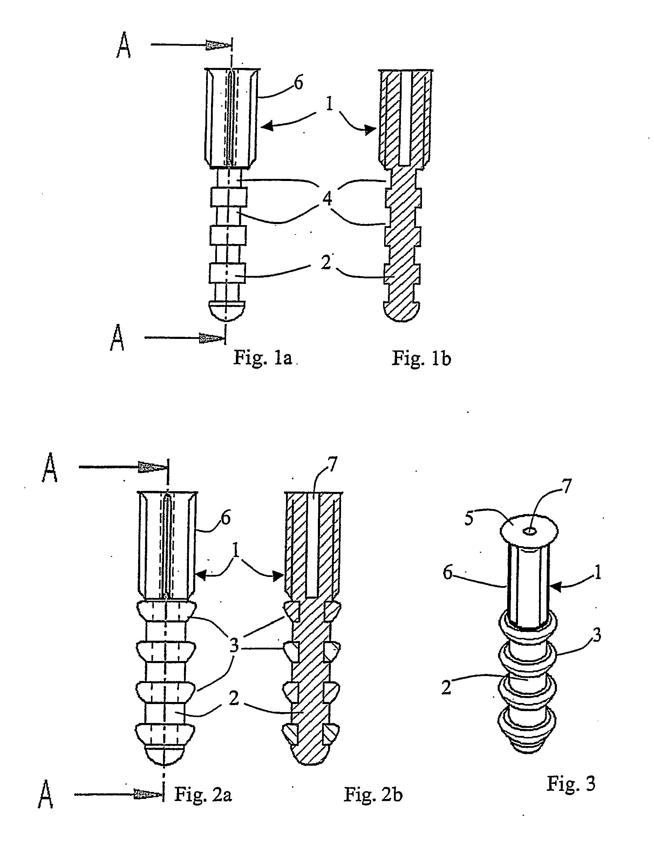

Figure 3 illustrates a preferred embodiment of a plug 1 according to the invention comprising a core 2 of a hard material being provided with a number of rings 3 made from a softer, preferably rubber-like material. Figure 2a and 2b shows the same plug from the side and in a section along the line A-A in figure 2a, respectively.

In the drawings the plug 1 is shown with four rings 3 of a soft, pliable material 3. When pushing the plug into a hole with corresponding dimensions the soft material 3, preferably a rubber-like plastic material, is pushed outward against the head 5 of the plug. The elasticity and the friction against the walls of the hole will lock the rings against the hole so that a movement in the opposite direction will meet much more resistance and thus fasten the plug in the hole. To secure this capability the rings according to the preferred embodiment of the invention are wedge-shaped in the direction from the head part 5, so as to obtain as little resistance as possible when the plug is inserted into the hole, but function to some degree as barbs if it is pulled out.

The plug is shown with four rings, but a different number and shape may be contemplated. More than one ring is, however, advantageous, because they assist in maintaining the plug orientation in the hole and also improving the grip if the walls in the hole have varying characteristics along its length.

In the plug head 5 shown in the drawings a coaxial hole 7 is provided, e.g. for a nail or screw. In contrast to the known art this has no primary function when mounting the plug, but may give an additional feature for fastening hooks or similar on a wall. As the plug does not depend on a screw for pressing it into the wall the axial hole may be provided with threads, e.g. for machine screws, so that removal and mounting of the screw, and that which is fastened by it, is easy. By partially splitting the plug in the longitudinal direction it is, however, possible to obtain a similar effect as in the known art pressing the plug against the walls in the hole.

The plug is also shown with longitudinal side ribs 6 which may limit the rotation of the plug, e.g. when a screw is screwed in, and also guides the plug when it is inserted into the hole.

Figures 1a and 1b shows, in a similar manner as figures 2a and 2b, the core of the plug, but without the outer material. As is evident from the drawings the rings of a softer material 3 are fastened to the core 1 in ring shaped recesses 4 around it, so that the rings will not move in the longitudinal direction when being mounted or in efforts to remove the plug. This fastening may of course be obtained in many ways with more or less advanced gripping devices in the recess. For example the edge of the recess may be provided with lips extending out over the recess so that the ring material is molded in under them and thus locks them to the core. One may also consider a solution in which the alternative to the recesses are used, e.g. ridges protruding from the core, the rings being positioned around them. As an alternative or in addition to these fastening devices adhesives may of course also be used.

The production method for the plug may be chosen from different considerations, but preferably the production technique being used will be a so-called multi component injection molding. This technique makes it possible to combine two different plastic materials in a useable way, and may be described as follows:
- A first material, preferably the hard one, is molded in a mold, e.g. with the shape shown in figures 1a and 1b in the accompanying drawings.
- The product is moved, either using a robot or with shifting mechanisms in the form tool, over to a new mold.
- The second material is molded on the first. This mold is then shaped as an addition to the first geometry, including the soft parts to be molded thereon, so that the finished product looks as shown in figures 2a, 2b and 3.
The machines are then specially built for such so-called multi component injection molding and are provided with a plastification unit for each material.

Adhesion between the different materials is obtained either in that the two materials have natural adhesion or with mechanical anchoring built into the construction. A combination of these is also possible.

To this plug the hard material is preferably made in Polypropylene (PP) and the soft material in a so-called thermoplastic elastomere (TPE). Here it is possible to find material combinations having a very good natural adhesion.

The plugs may be produced in different dimensions, with or without head, with or without a hole for mounting a screw, with rounded straight or sharp end, etc, depending on the intended use. Typical uses are fastening of isolation materials, plastic membranes, tree and metal constructions to concrete, bricks, leca or other lightweight concrete.

## Claims

1. Plug (1) for fastening in holes with suitable dimensions, e.g. concrete or lightweight concrete, comprising a core (2) made from a hard material and at least one outer part (3) fastened to the core, said outer part being made from a soft, pliable material and extending outward from the core in a radial direction, **characterized in that** said at least one outer part (3) protrudes outside the outer circumference of the core (2).

2. Plug according to claim 1, wherein the outer part(s) (3) comprises one or more rings fastened to the core (2) in chosen positions in the longitudinal direction of the core.

3. Plug according to claim 1, wherein the core (2) is made from a hard plastic material and the outer part (3) from a rubber-like plastic material.

4. Plug according to claim 1, wherein the outer part (3) is provided with gripping organs (4), e.g. recesses, in the core (2) for avoiding shifts in the longitudinal direction of the plug.

5. Plug according to claim 1, wherein the outer part is fastened to the core with an adhesive.

6. Plug according to claim 1, wherein the outer part (3) is molded onto the core (2).

7. Plug according to claim 6, wherein the core (2) and the outer part (3) is produced using a multi component injection molding technique.

8. Plug according to claim 1, comprising a head (5) in one end.

9. Plug according to claim 1, comprising an axial hole (7) provided in one end, e.g. for fastening a screw therein.

## Patentansprüche

1. Dübel (1) zum Befestigen in Löchern mit geeigneten Abmessungen, z.B. Beton oder Leichtbeton, mit einem Kern (2), der aus einem harten Material hergestellt ist, und zumindest einem Außenteil (3), das an dem Kern befestigt ist, wobei das Außenteil aus einem weichen, biegsamen Material hergestellt ist und sich von dem Kern in einer radialen Richtung nach außen erstreckt, **dadurch gekennzeichnet, dass** das zumindest eine Außenteil (3) außerhalb des äußeren Umfangs des Kerns (2) vorsteht.

2. Dübel nach Anspruch 1, bei dem das/die Außenteil(e) (3) einen oder mehrere Ringe umfasst, die an dem Kern (2) an ausgewählten Positionen in der Längsrichtung des Kerns befestigt sind.

3. Dübel nach Anspruch 1, bei dem der Kern (2) aus einem harten Kunststoffmaterial und das Außenteil (3) aus einem gummiartigen Kunststoffmaterial hergestellt ist.

4. Dübel nach Anspruch 1, bei dem das Außenteil (3) mit Greifhilfsmitteln (4), z.B. Aussparungen, in dem Kern (2) versehen ist, zum Vermeiden von Verschiebungen in der Längsrichtung des Dübels.

5. Dübel nach Anspruch 1, bei dem das Außenteil an dem Kern mit einem Haftmittel befestigt ist.

6. Dübel nach Anspruch 1, bei dem das Außenteil (3) auf den Kern (2) geformt ist.

7. Dübel nach Anspruch 6, bei dem der Kern (2) und das Außenteil (3) unter Verwendung einer Mehrkomponenten-Spritzgusstechnik hergestellt ist.

8. Dübel nach Anspruch 1, umfassend einen Kopf (5) an einem Ende.

9. Dübel nach Anspruch 1, umfassend ein axiales Loch (7), das an einem Ende vorgesehen ist, z.B. zum Befestigen einer Schraube darin.

## Revendications

1. Cheville (1) pour fixation dans des trous avec des dimensions appropriées, par exemple dans du béton ou du béton léger, comprenant un noyau (2) fait en un matériau dur et au moins une partie externe (3) fixée sur le noyau, ladite partie externe étant faite en un matériau souple pliage, et s'étendant vers l'extérieur à partir du noyau dans une direction radiale, **caractérisée en ce que** ladite au moins une partie externe (3) fait saillie à l'extérieur de la circonférence externe du noyau (2).

2. Cheville selon la revendication 1, dans laquelle la(les) partie(s) externe(s) (3) comprend une ou plusieurs bagues sur le noyau (2) en des positions choisies dans la direction longitudinale du noyau.

3. Cheville selon la revendication 1, dans laquelle le noyau (2) est fait d'un matériau plastique dur et la partie externe (3) d'un matériau plastique analogue au caoutchouc.

4. Cheville selon la revendication 1, dans laquelle la partie externe (3) est munie d'organes de saisie (4), par exemple des évidements, dans le noyau (2) pour éviter des déplacements dans la direction longitudinale de la cheville.

5. Cheville selon la revendication 1, dans laquelle la partie externe est fixée sur le noyau avec un adhésif.

6. Cheville selon la revendication 1, dans laquelle la partie externe (3) est moulée sur le noyau (2).

7. Cheville selon la revendication 1, dans laquelle le noyau (2) et la partie externe (3) sont produits en utilisant une technique de moulage par injection multi composants.

8. Cheville selon la revendication 1, comprenant une tête (5) à une extrémité.

9. Cheville selon la revendication 1, comprenant un trou axial (7) disposé à une extrémité, par exemple pour fixer une vis à l'intérieur de celui-ci.
